# EUROPÄISCHE PATENTSCHRIFT

(11) **EP 1 363 081 B1**
(45) Veröffentlichungstag und Bekanntmachung des Hinweises auf die Patenterteilung: **13.12.2006**
(21) Anmeldenummer: 03010228.9
(22) Anmeldetag: 07.05.2003
(51) Int. Cl.: F24D 17/00, F24D 19/00

(54) **Solaranlage**
Solar installation
Installation solaire

(30) Priorität: 13.05.2002 DE 20207522 U
(43) Veröffentlichungstag der Anmeldung: 19.11.2003
(73) Patentinhaber: Wagner & Co. Solartechnik GmbH, 35091 Cölbe (DE)
(72) Erfinder: Dr.-Ing. Schabbach, Thomas, D-34225 Baunatal (DE); Dipl-Ing. Wagner, Andreas, D-35091 Cölbe (DE)
(74) Vertreter: Olbricht, Karl Heinrich

(56) Entgegenhaltungen:
- EP-A- 0 387 377
- EP-A- 0 616 174
- EP-A- 1 103 775
- DE-A1- 1 776 066
- DE-A1- 1 784 024
- DE-A1- 3 742 910
- DE-A1- 19 721 657
- US-A- 596 062
- US-A- 2 599 325
- US-A- 4 930 492

## Beschreibung

Die Erfindung bezieht sich auf eine Solaranlage gemäß den Oberbegriffen der Ansprüche 1 und 5.

Typische Solaranlagen haben wenigstens einen z.B. auf einem Hausdach angeordneten Sonnenkollektor, der über Rohrleitungen mit einem Wärmespeicher verbunden ist. Dieser ist allgemein ein aufrechtstehender Brauchwasser-Tank, der einen Wärmetauscher von Rohrschlangen-Form enthält. In der Praxis mißt man die Temperatur direkt am Speicher, etwa in der mittleren Höhe des Solarwärmetauschers. Abhängig von der aktuellen Temperaturdifferenz zur Kollektortemperatur ist eine in der Rücklauf-Leitung angeordnete Pumpe steuerbar.

Bei genügender Sonnen-Einstrahlung aktiviert ein Regler die Pumpe, so daß das in den Leitungen befindliche Medium - vielfach Wasser mit Frostschutzmittel - zirkuliert, wodurch die vom Kollektor aufgenommene Wärme in den Tank transportiert wird. Reicht die Sonnenwärme nicht aus, so wird die Pumpe abgeschaltet; dann kann das im Speicher befindliche Wasser mit konventionellen Heizmitteln, etwa über einen zweiten Wärmetauscher, auf eine gewünschte Temperatur gebracht werden. Wenn eine Überhitzung auftritt, etwa im heißen Sommer oder bei Stromausfall, muß man einen überdruckbedingten Verlust von Solarflüssigkeit verhindern. Als sog. Eigensicherung dient hierzu beispielsweise ein geeignet dimensioniertes Membranausdehnungsventil.

Um Baukomponenten, etwa ein Membranausdehnungsgefäß, einzusparen und auch um Wärmeträger ohne Frostschutz einsetzen zu können, hat man Drainback-Systeme entwickelt, die das Wärmeträgermedium bei Pumpenstillstand in einen Auffangbehälter zurückfließen lassen, der sich meist vorlaufseitig vor dem Wärmespeicher-Behälter befindet. Der entleerte Kollektor enthält nur noch Luft; erst durch Pumpenbetrieb wird er wieder mit dem Medium aufgefüllt und somit nutzbar. Durch Befüllung des Kollektorkreises mit dem flüssigen Wärmeträger und mit Luft erreicht man, daß bei Wärmeausdehnung ein Luftpolster im Auffangbehälter den Druckausgleich übernimmt. Das Gefrieren und Verdampfen von Solarflüssigkeit im Außenbereich wird verhindert, wenn die Sotarftüssigkeit im Pumpenstillstand aus dem Kollektor entleert wird. Man kann in diesem Fall als Wärmeträgermedium sogar einfach Wasser verwenden, was den Vorteil größerer Wärmekapazität sowie geringerer Viskosität als Glycol/Wasser-Gemische hat. Es ist jedoch ungünstig, daß die Gestaltung des Kollektorfeldes wegen der Erfordernisse von Be- und Entlüftung sowie gleichmäßiger Durchströmung verschiedenen Einschränkungen unterliegt. Man braucht ein Mindestgefälle bei der Verrohrung und auch spezielle Pumpen mit großer Förderhöhe und kleinem Durchsatz, z.B. Zahnradpumpen, deren Betriebsgeräusch sehr stören kann. Ferner ist etwa in Speicherhöhe des Kollektorkreis-Vorlaufs ein Rücklaufgefäß vonnöten, das zugleich temperatur- und druckbeständig sowie besonders wärmegedämmt sein muß.

In US-A-4 574 779 ist eine Solaranlage zur Warmwasser-Erzeugung beschrieben, die eine Drainback-Einrichtung mit einem Rücklaufabteil in Kombination mit einem Wärmetauscher aufweist. Dabei sind ein Speicher mit einer Rohrschlange oben in einem Behälter und das Rücklaufabteil vertikal darunter durch eine waagrechte Trennwand separiert. In diese mündet die Rohrschlange von oben in das Rücklaufabteil, aus dem Solarflüssigkeit mittels einer Pumpe zu dem/den Wärmeverbraucher/n gefördert wird. Derartige Solaranlagen erfordern durch die notwendige Trennung der Flüssigkeitssysteme einen erhöhten Konstruktionsaufwand.

Aus DE-A-2 753 756 geht eine Solarheizungsanlage hervor, die mit einem Entleer- und Ausdehnungsgefäß versehen und als offenes System ausgebildet ist. Es besteht also eine ständige Verbindung zur Atmosphäre, und dementsprechend muß der Wasserstand laufend überwacht und ergänzt werden, damit die Wärmetauscher für Brauch- bzw. Heizungswasser nicht trockengehen.

EP-A-0616174 beschreibt eine Solarenergie-Speichereinrichtung mit einem Puffertank, an den ein Fluid-Kreislauf bestehend aus einem Kollektorfeld, einem in dem Puffertank vorgesehenen Wärmetauschers, einer sich zwischen dem Kollektorfeld und dem Wärmetauscher erstreckenden ersten Rohrleitung und einer sich zwischen dem Kollektorfeld und dem Wärmetauscher erstreckenden zweiten Rohrleitung, in der eine Fluid-Pumpe abgeschlossen ist, angeschlossen ist, wobei der Kreislauf über eine Drainback-AufnahmeEinrichtung in Form eines im unteren Bereich des Puffertanks angeordneten Drainback-Tankes verfügt.

Ein Wärmetauscher ist in EP-A-11037705 beschrieben. US-A-2,599,3520 bezieht sich auf Rohrleitungen, die beilspielsweise in einem Wärmetauscher verwendet werden.

Es ist ein wichtiges Ziel der Erfindung, die zuvor genannten und weitere Nachteile des Standes der Technik zu überwinden und mit wirtschaftlichen Mitteln Verbesserungen zu schaffen, durch die ein Rückfluß (Drainback) und Druckausgleich ohne zusätzliches Außengefäß möglich ist. Neuartige Einrichtungen sollen ferner Volumeneinsparungen ermöglichen, kostengünstig zu fertigen sein und auch bisher nicht erzielte thermodynamische Vorteile bieten, namentlich eine erhöhte Wärmestromdichte im Wärmetauschsystem.

Hauptmerkmale der Erfindung sind in den Ansprüchen 1 und 5 angegeben. Ausgestaltungen sind Gegenstand der Ansprüche 2 bis 4 und 6 bis 9.

Bei einer Solaranlage mit einem Kollektorfeld, das durch eine Vorlaufleitung und eine Rücklaufleitung, streckenweise insbesondere in Form eines Leitungspaares, mit einem Wärmetauscher eines Wärmespeicher-Behälters verbunden ist, wobei die Rücklaufleitung eine Pumpe aufweist, gegebenenfalls mit einem Bypaß zu dieser, und wobei vorlauf- oder rücklaufseitig eine Drainback-Aufnahmeeinrichtung vorhanden ist, sieht die Erfindung gemäß dem kennzeichnenden Teil von Anspruch 1 vor, daß sich in dem Wärmespeicher-Behälter die Drainback-Aufnahmeeinrichtung befindet, die mit dem Wärmetauscher baulich vereinigt ist, der als integrale Rohrschlange ausgebildet ist und in seinem oberen Bereich ein Ausdehnungs- und Rücklauf-Volumen aufweist. Infolgedessen entfällt ein Ausdehnungsgefäß außen, d.h. in der Vorlaufleitung außerhalb des Speichers. Man bemißt das Volumen des Wärmeträgermediums so, daß bei Pumpen-Stillstand die Drainback-Aufnahmeeinrichtung damit gefüllt ist, welche aber bei Pumpen-Betrieb die verdrängte Luft aufnimmt. Diese polstert bei Temperaturanstieg die Ausdehnung des Wärmeträgermediums ab, ohne daß die damit verbundene Druckerhöhung zu vorzeitigem Ansprechen eines Sicherheitsventils führt.

Zwar hat man herkömmlich bereits innerhalb eines Speichers eine Rücklauf-Auffangeinrichtung angeordnet, allerdings als eigens ausgeformtes, in Fließrichtung vor dem Wärmetauscher eingeschweißtes Gerät. Erfindungsgemäß wird hingegen das notwendige Rücklaufvolumen direkt im Wärmetauscher untergebracht, so daß sein unterer und sein oberer Bereich nahtlos ineinander übergehen. Durch diese konstruktive Vereinfachung sowie dank der Verwendung von druck- und temperaturbeständigem Rohrmaterial ohne Schweißnähte und ohne Dämmung ergibt sich eine besonders einfache Herstellung mit wesentlichen Einsparungen in der Fertigung und Erleichterungen für die Wartung.

Anspruch 3 sieht vor, daß im Wärmespeicher-Behälter oberhalb der Rohrschlange ein Nachheiz-Wärmetauscher angeordnet ist, vorzugsweise mit ihr koaxial bezüglich der Behälterachse. Dieser zweite Wärmetauscher ist mit einer Sekundärheizung verbunden, um in der Art bivalenter Speicher bei Ausfall oder Abschwächung von Sonnen-Einstrahlung als Ersatz-Wärmequelle zu dienen.

Zumindest der untere Rohrschlangen-Bereich kann laut Anspruch 4 Einrichtungen zur Verminderung des freien Strömungsquerschnitts im Inneren enthalten, z.B. einen oder mehrere Füllkörper. Dadurch wird der Wärmeübergang verbessert. Die Gesamtwärmekapazität steigt noch, wenn solche Füllkörper aus einem Material hoher Wärmekapazität wie Stahl, Stein, Keramik o.dgl. bestehen. Während dies zur Langzeit-Wärmehaltung beiträgt, spricht das System allerdings etwas träger auf Temperaturänderungen an.

Zwar hatte man bei einer Vorrichtung gemäß DE-A-3 315 280 in Wärmetauscherrohren hohle elastische Einsätze vorgesehen, die als passiver Frostschutz eine Volumenvergrößerung des Wassers erlauben und so das Zerplatzen von Wärmetauscherrohren eines Wasserkühlers durch Einfrieren vermeiden sollen. Mit der Wärmeübertragung hat das aber nichts zu tun. Ebenfalls zum Frostschutz wurde in US-A-4 321 908 innerhalb einer Flüssigkeitsleitung ein beiderends abgedichtetes Nylonrohrstück vorgeschlagen, das mit Edelgas unter Überdruck gefüllt, aber bei Eisbildung komprimierbar ist, um eine Volumenausdehnung der Flüssigkeit aufzufangen. Dabei soll eine Drahtwendel gleichmäßigen Wandabstand zu der Flüssigkeitsleitung gewährleisten und in der Strömung stärkere Verwirbelung erzeugen.

Bei einer Solaranlage mit einem Sonnenkollektor, der durch eine Vorlaufleitung und eine Rücklaufleitung, streckenweise insbesondere in Form eines Leitungspaares, mit einem Wärmetauscher eines Wärmespeicher-Behälters verbunden ist, wobei die Rücklaufleitung eine Pumpe aufweist, gegebenenfalls mit einem Bypaß zu dieser, insbesondere nach einem der Ansprüche 1 bis 4, sieht der unabhängige Anspruch 5 vor, daß der Wärmetauscher eine Rohranordnung ist oder aufweist, die erfindungsgemäß mit Mitteln zur Verminderung des freien Strömungsquerschnitts versehen ist. Weil dadurch der Solarflüssigkeitsinhalt reduziert wird, reicht der obere Teil des Wärmetauschers zur Aufnahme des Ausdehnungs- bzw. Rücklauf-Volumens. Die Rohranordnung kann - wie der Kollektor - ein Serpentinen-Flachkörper oder auch ein z.B. vertikales Heizregister sein, hat aber bevorzugt Wendelgestalt, wobei die Wendelachse parallel zur Achse des Behälters verläuft. Die Querschnitts-Verengung erfolgt namentlich im Rohr-Inneren, so daß man konstanten Rohr-Außendurchmesser hat und für die Fertigung einheitliches Standardrohr verwenden kann. Den Bypaß setzt man ein, wenn die Anlage ein Drainback-System und gleichzeitig die Pumpe eine Verdrängerpumpe ist, die im Stillstand den Rückfluß absperrt und das Entleeren des Kollektors verhindert.

Besonders günstig ist es, wenn die Rohranordnung nach Anspruch 6 Bestandteil einer Rohrschlange ist, die zylindrische oder profilierte Füllkörper führt, welche somit den freien Rohrquerschnitt verringern, was zu erhöhter Strömungsgeschwindigkeit und daher vermehrter Turbulenz im Rohrsystem führt. In Betracht kommt auch ein Rohr, dessen Volumen durch Profilierung oder Querschnitts-Umformung reduziert wird. Die gesteigerte Turbulenz bewirkt optimalen Wärmeübergang. Zugleich kommt man mit kleinerem, aber besser genutztem Wärmetauscher-Volumen aus, denn es wird weniger Wärmeträgermedium benötigt und bei Temperatur-Erhöhung ist dessen Ausdehnungsvolumen entsprechend gering. Es besteht somit ein deutlicher Unterschied zu einem Wärmetauscher für Kläranlagen laut DE-U-1 967 260, der eine Wendel aus Rund- oder Flachmaterial dazu benutzt, an einem schlammführenden Innenrohr entlang ein Heizmedium innerhalb eines konzentrisch dazu angeordneten Außenrohrs schraubenlinienförmig zu leiten, um durch solche Wegverlängerung einen verbesserten Wärmeübergang zu erzielen.

Die Füllkörper können laut Anspruch 7 einheitliche, z.B. rohrförmige Gestalt haben, so daß sie sich einfach und mit vorteilhaften Eigenschaften bei niedrigen Kosten für Fertigung und Lagerhaltung herstellen lassen, namentlich mit glatter, gut gleitfähiger Oberfläche. Günstige Verwirbelung erreicht man nach Anspruch 8 durch geeignet geformte, verwirbelungsgünstige Einzelkörper, z. B. durch ein bei der Wärmetauscher-Herstellung einfach mitgewickeltes Rohr. Solche Körper können insbesondere endseitig in sich verschlossen sein.

Die auch nachträglich in den Wärmetauscher einbringbaren Füllkörper können in der Rohrschlange fixiert oder laut Anspruch 9 in ihr im wesentlichen konzentrisch geführt sein. Es kommen jedoch auch exzentrische Anordnungen und/oder nicht-rotationssymmetrische Füllkörper in Frage.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Darin zeigen:
- Fig. 1: ein Schema einer erfindungsgemäßen Solaranlage,
- Fig. 2a: eine schematisierte Draufsicht auf einen Wärmetauscher-Teil,
- Fig. 2b: eine vergrößerte Teil-Seitenansicht eines Rohrabschnitts des Wärmetauschers von Fig. 2a entsprechend dem Ausschnitt IIb und
- Fig. 2c: eine Rohr-Querschnittsansicht zu Fig. 2b.

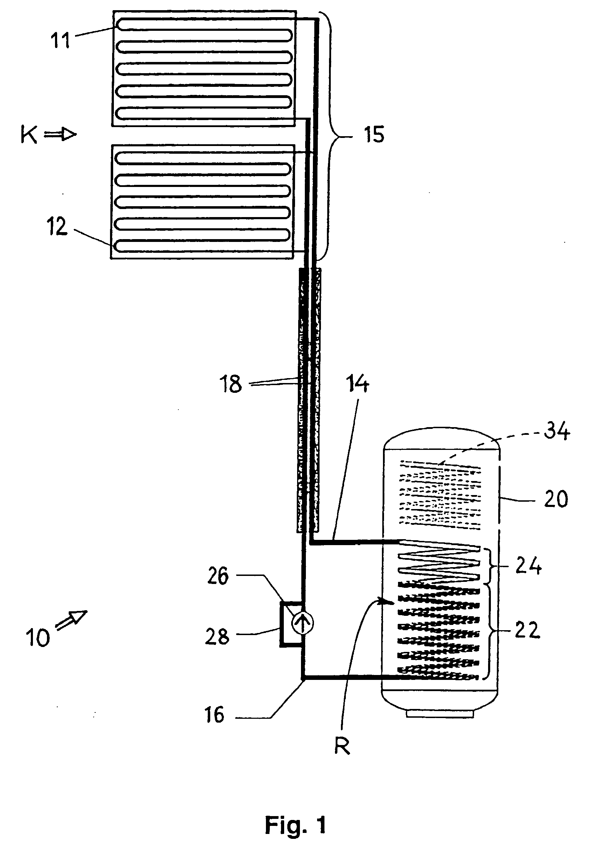

Die schematische Übersicht von Fig. 1 läßt erkennen, daß eine insgesamt mit 10 bezeichnete Solaranlage ein Kollektorfeld K aufweist, das aus zwei im gezeichneten Beispiel als Serpentinenabsorber ausgebildeten Sonnenkollektoren 11, 12 besteht. Diese sind mit einer Verteil- oder Sammelleitung 15 verbunden, die sich einerseits als Vorlauf 14 und andererseits als Rücklauf 16 zu einem Wärmespeicher-Behälter 20 hin fortsetzt, streckenweise in Form einer Doppelrohrpackung 18.

Der Wärmespeicher-Behälter 20 enthält einen Wärmetauscher 22, der eine Glattrohr-Wendel mit senkrechter Wendel-Achse sein kann und unten an den Rücklauf 16, oben an den Vorlauf 14 angeschlossen ist. Der obere Bereich des Wärmetauschers 22 ist in nahtlosem Übergang als Drainback-Aufnahme 24 gestaltet, wobei die Elemente 22, 24 eine insgesamt mit R bezeichnete integrale Rohrschlange bilden.

In der Rücklaufleitung 16 ist eine Pumpe 26 angeordnet, die für den Rückfluß des Wärmeträgermediums, das die vorgenannten Komponenten durchströmt, von einem Bypaß 28 überbrückt sein kann.

Im Wärmespeicher-Behälter 20 kann, wie gestrichelt angedeutet ist, oberhalb der Rohrschlange R ein weiterer Wärmetauscher 34 insbesondere koaxial angeordnet sein. Er ist zweckmäßig über (nicht dargestellte) Zufluß- und Abflußleitungen mit einer (ebenfalls nicht gezeichneten) Heizeinrichtung verbunden, um bei geringerer Sonneneinstrahlung ein Nachheizen in der Art bivalenter Solarspeicher zu ermöglichen.

Man erkennt, daß die Solaranlage 10 einen geschlossenen Kollektorkreis aufweist, der überwiegend mit einem Wärmeträgermedium (dickausgezogene Leitungs-Teile) und teilweise mit Luft gefüllt ist (hohl gezeichnete Leitungs- und Wärmetauscher-Teile). Das Volumen des flüssigen Wärmeträgermediums wird so bemessen, daß die Wendeln der Rohrschlange R bei Stillstand der Pumpe 26 mit der Wärmeträgerflüssigkeit etwa gefüllt sind. Sobald die Pumpe läuft, nimmt der obere Bereich 24 der Rohrschlange R die nun verdrängte Luft auf. So bildet sich ein Luftpolster, das wegen seiner Kompressibilität bei Temperaturanstieg die Volumenausdehnung des Wärmeträgermediums ausgleicht. Selbst im Falle einer Kollektorüberhitzung kann das Volumen von verdampfter Wärmeträgerflüssigkeit aufgenommen werden, ohne daß die Druckerhöhung zum Ansprechen eines Sicherheitsventils führt, sofern die Kollektoren horizontal angeordnet sind und der Solarflüssigkeits-Dampfdruck den gesamten Kollektorinhalt austreibt, was zugleich das Verdampfen größerer Mengen Solarflüssigkeit verhindert.

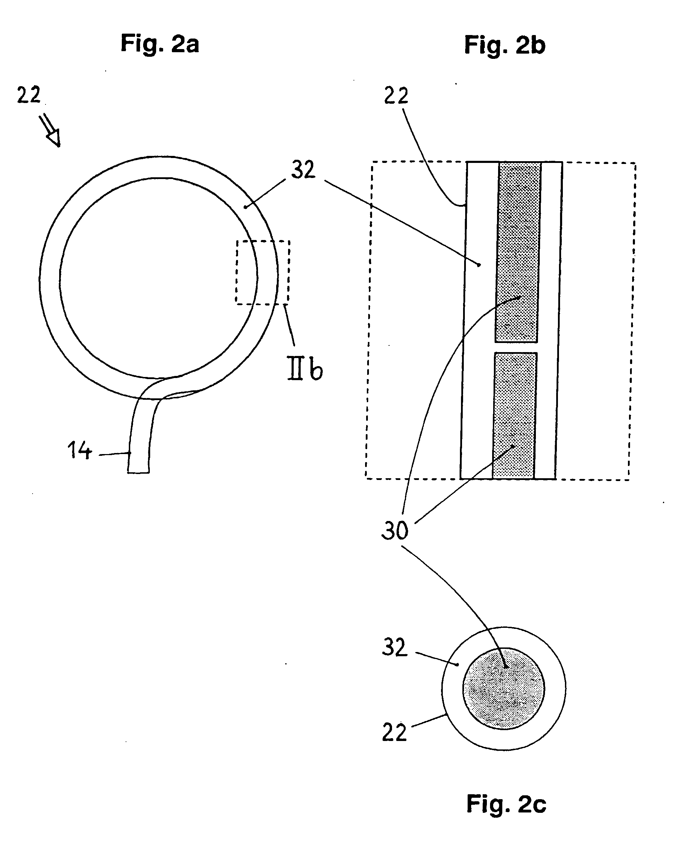

Die Rohrschlange R wird durch die auf den Wärmetauscher 22 aufgestockte Drainback-Aufnahme 24 um eine Anzahl von Rohrwindungen erweitert. Das würde an sich eine entsprechend größere Menge des Wärmeträgermediums erfordern. Um dem entgegenzuwirken und zugleich den Wärmeübergang zu verbessern, sieht die Erfindung vor, daß zumindest im unteren Bereich der Rohrschlange R, d.h. im Wärmetauscher 22 Mittel zur Querschnittsminderung vorhanden sind, beispielsweise - wie aus Fig. 2a bis 2c hervorgeht - ein oder mehrere bewegliche Füllkörper 30 und/oder feste Einbauteile im Rohr-Inneren 32.

Man kann einen z.B. rohrförmigen Körper oder eine Folge von Einzelkörpern vorsehen, die auch nachträglich in die Rohrschlange R eingebracht werden und im Bedarfsfall darin fixiert sein können. Im Beispiel der Fig. 2b ist im Inneren 32 der Rohranordnung eine Anzahl zylindrischer Füllkörper 30 vorhanden, die mit Abstand zu den Rohrwandungen hintereinander liegen. Dadurch wird der freie Strömungsquerschnitt im Rohr hauptsächlich auf Randbereiche reduziert, wodurch sich die Strömungsgeschwindigkeit im verbleibenden Umfangsspalt erhöht und zugleich Verwirbelungen in an sich bekannter Weise erzeugt werden.

Die Füllkörper 30 sind insbesondere endseitig geschlossen und mit glatter Oberfläche versehen. Bestehen sie jeweils aus einem Rohrstück, so erreicht man die gewünschte Volumenverdrängung, indem es beidseitig verschlossen oder einseitig offen, jedoch mit Luft gefüllt ist, welche die Wärmeausdehnung zusätzlich puffert. Die Füllkörper 30 können aus einem Material mit hoher Wärmekapazität bestehen, beispielsweise aus Stahl, Stein, Keramik o. dgl. Wenn sie ein Profil haben, beispielsweise mit Radialstegen oder Flügeln, wird dadurch eine bevorzugt konzentrische Führung im Rohr-Inneren 32 ermöglicht oder unterstützt, wie in Fig. 2c (unter Weglassung von Radialstützen) angedeutet ist. Vorgesehen ist aber auch, die Füllkörper 30 im Rohr-Inneren 32 exzentrisch zu führen (Fig. 2b).

Die Erfindung ist nicht auf eine der vorbeschriebenen Ausführungsformen beschränkt, sondern in vielfältiger Weise abwandelbar. Beispielsweise kann man die Art, Anordnung und Anzahl der Kollektoren 11, 12 variieren, ebenso eine mit ihnen verbundene Hydraulik. Ferner können statt der Doppelrohrführung Einzelrohre vorhanden sein. Die Leitungen 14, 15, 16 können vor Ort z.B. als Kupferrohre verlegt werden. Ein Pumpen-Bypaß 28 ist nicht bei allen Anwendungen notwendig.

Bei Pumpen-Stillstand ist es erwünscht, daß Luft im Vorlauf 14 aufsteigt. Während des Pumpen-Betriebs verhindert man ein Aufsteigen der Luft dorthin durch hohe Strömungsgeschwindigkeit des Wärmeträgermediums im Kollektorkreis. Gegen den dynamischen Druck der strömenden Flüssigkeit werden bewegliche Füllkörper 30 in der Rohranordnung z.B. durch einen (nicht gezeichneten) unteren Gitter-Einsatz gehalten. Ein Aufschwimmen wird durch das spezifische Gewicht der Füllkörper 30 oder durch geeignete konstruktive Maßnahmen verhindert.

Rohrförmige Einzelkörper 30 können bereits beim Herstellen des Wärmetauschers 22 durch Wickeln der Rohrwindungen mit eingebracht werden. Haben die Füllkörper 30 Kugelform, so kann man sie bequem in die fertige Rohrschlange R einspülen.

Man erkennt, daß eine bevorzugte Bauform einer Solaranlage 10 mit einem Kollektorfeld K und einem Wärmespeicher-Behälter 20 vorlauf- oder rücklaufseitig eine Drainback-Aufnahmeeinrichtung 24 hat, die erfindungsgemäß mit einem im Speicher-Behälter 20 befindlichen Wärmetauscher 22 integriert ist, indem dessen oberer Bereich ein Ausdehnungs- und Rücklauf-Volumen aufweist. Vorteilhaft ist er eine integrale Rohrschlange R, speziell eine Glattrohr-Wendel mit gleichförmiger Steigung. Darüber kann - wie bei bivalenten Solarspeichern - ein zweiter, mit ihr zur Behälterachse koaxialer Nachheiz-Wärmetauscher 34 angeordnet sein. Zumindest im unteren Bereich der Rohrschlange R, d.h. im Wärmetauscher 22 sind Mittel zur Verminderung des freien Strömungsquerschnitts im Rohr-Inneren 32 vorgesehen, namentlich zylindrische oder profilierte, vorzugsweise bewegliche Füllkörper 30. Diese können insbesondere aus einem Material hoher Wärmekapazität bestehen, etwa aus Stahl, Stein, Keramik o. dgl. Zweckmäßig sind die Füllkörper 30 Einzelkörper von einheitlicher, vor allem verwirbelungsgünstiger Gestalt. Auch ein einziger Füllkörper 30 ist möglich, z.B. ein endseitig verschlossenes Stahlrohr.

### Bezugszeichenliste

- K: Kollektorfeld
- R: Rohrschlange
- 10: Solaranlage
- 11, 12: Sonnenkollektoren
- 14: Vorlaufleitung
- 15: Verteil- / Sammelleitung
- 16: Rücklaufleitung
- 18: Leitungspaar
- 20: Wärmespeicher-Behälter
- 22: Wärmetauscher / unterer Bereich
- 24: Drainback-Aufnahme / oberer Bereich
- 26: Pumpe
- 28: Bypaß
- 30: Füllkörper
- 32: Rohr-Inneres
- 34: Nachheiz-Wärmetauscher

## Patentansprüche

1. Solaranlage (10) mit einem Kollektorfeld (K), das durch eine Vorlaufleitung (14) und eine Rücklaufleitung (16), streckenweise insbesondere in Form eines Leitungspaares (18), mit einem Wärmetauscher (22) eines Wärmespeicher-Behälters (20) verbunden ist, wobei die Rücklaufleitung (16) eine Pumpe (26) aufweist, gegebenenfalls mit einem Bypaß (28) zu dieser, und wobei vorlauf- oder rücklaufseitig in dem Wärmespeicher-Behälter (20) eine Drainback-Aufnahmeeinrichtung (24) vorhanden ist, **dadurch gekennzeichnet, daß** die Drainback-Aufnahmeeinrichtung (24) mit dem Wärmetauscher (22) baulich vereinigt ist, der als integrale Rohrschlange ausgebildet ist und in seinem oberen Bereich ein Ausdehnungs- und Rücklauf-Volumen aufweist.

2. Solaranlage nach Anspruch 1, **dadurch gekennzeichnet, daß** die Rohrschlange (R) eine Glattrohr-Wendel mit gleichförmiger Steigung ist.

3. Solaranlage nach Anspruch 1 oder 2, **dadurch gekennzeichnet, daß** im Wärmespeicher-Behälter (20) oberhalb der Rohrschlange (R) ein Nachheiz-Wärmetauscher (34) angeordnet ist, vorzugsweise zu ihr koaxial.

4. Solaranlage nach einem der Ansprüche 1 bis 3, **dadurch gekennzeichnet, daß** zumindest der untere Bereich der Rohrschlange (R) Einrichtungen zur Verminderung des freien Strömungsquerschnitts im Inneren enthält, beispielsweise einen oder mehrere Füllkörper (30).

5. Solaranlage mit einem Kollektorfeld (K), das durch eine Vorlaufleitung (14) und eine Rücklaufleitung (16), streckenweise bevorzugt in Form eines Leitungspaares (18), mit einem Wärmetauscher (22) eines Wärmespeicher-Behälters (20) verbunden ist, wobei die Rücklaufleitung (16) eine Pumpe (26) aufweist, gegebenenfalls mit einem Bypaß (28) zu dieser, insbesondere nach einem der Ansprüche 1 bis 4, wobei der Wärmetauscher (22) eine Rohranordnung ist oder aufweist, die Bestandteil einer Rohrschlange (R) ist, **dadurch gekennzeichnet, daß** die Rohrschlange zumindest in ihrem unteren Bereich (22) im Inneren (32) zylindrische oder profilierte Füllkörper (30) zur Verminderung des freien Strömungsquerschnitts führt.

6. Solaranlage nach Anspruch 5, **dadurch gekennzeichnet, daß** die Füllkörper einheitliche, z.B. rohrförmige Gestalt besitzen.

7. Solaranlage nach einem der Ansprüche 4 bis 6, **dadurch gekennzeichnet, daß** die Füllkörper (30) insbesondere endseitig verschlossene, verwirbelungsgünstige Einzelkörper sind.

8. Solaranlage nach einem der Ansprüche 4 bis 8, **dadurch gekennzeichnet, daß** die Füllkörper (30) in der Rohrschlange (R) im wesentlichen konzentrisch geführt sind.

## Claims

1. Solar installation (10) comprising a collector area (K) connected to a heat exchanger (22) of a thermal storage tank (20) by means of a feed line (14) and a return line (16), for part of their path particularly in form of a pipe pair (18), wherein the return line (16) comprises a pump (26) and, as required, a bypass (28) to said pump (26), and wherein a drain-back reservoir unit (24) is arranged in the thermal storage tank (20) on the feed line side or the return line side, **characterized in that** the drain-back reservoir unit (24) is structurally associated with the heat exchanger (22) which is designed as an integral coiled pipe and comprises in its upper portion an expansion and drain-back volume.

2. Solar installation according to claim 1, **characterized in that** the coiled pipe (R) is a bare pipe coil wit a continuous upward slope.

3. Solar installation according to claim 1 or 2, **characterized in that** a reheat heat exchanger (34) is arranged in the thermal storage tank (20) above the coiled pipe (R), preferably coaxially to said coiled pipe (R).

4. Solar installation according to any one of claims 1 to 3, **characterized in that** at least the lower portion of the coiled pipe (R) comprises means for reducing the free cross-section of flow in the internal space, for example one or multiple filling elements (30).

5. Solar installation comprising a collector area (K) connected to a heat exchanger (22) of a thermal storage tank (20) by means of a feed line (14) and a return line (16), for part of their path preferably in form of a pipe pair (18), wherein the return line (16) comprises a pump (26) and, as required, a bypass (28) to said pump (26), in particular according to any one of claims 1 to 4, wherein the heat exchanger (22) is or comprises an array of pipes which is part of a coiled pipe (R), **characterized in that** the coiled pipe routes in its internal space (32), at least in its lower portion (22), cylindrical or profiled filling elements (30) for reducing the free cross-section of flow.

6. Solar installation according to claim 5, **characterized in that** the filing elements are of a uniform, e. g. tubular shape.

7. Solar installation according to any one of claims 4 to 6, **characterized in that** the filling elements (30) are in particular individual, turbulence promoting elements which are closed at each of their ends.

8. Solar installation according to any one of claims 4 to 8, **characterized in that** the filling elements (30) are routed in the coiled pipe (R) in an essentially concentric manner.

## Revendications

1. Installation solaire (10), comprenant une surface de capteurs (K) raccordée par une conduite d'alimentation (14) et une conduite de vidange (16), sur quelques tronçons notamment sous forme d'une paire de conduites (18), à un échangeur de chaleur (22) d'un réservoir de chaleur (20), ladite conduite de vidange (16) comprenant une pompe (26), le cas échéant avec un bypass (28) associé à la dernière, et ledit réservoir de chaleur (20) comprenant sur le côte alimentation ou le côté vidange un dispositif récepteur de vidange (24), **caractérisée en ce que** ledit dispositif récepteur de vidange (24) est constructivement associé avec l'échangeur de chaleur (22) qui est conçu comme un serpentin intégral, et qui comprend un volume d'expansion et de vidange dans sa partie supérieure.

2. Installation solaire selon la revendication 1, **caractérisée en ce que** le serpentin (R) est un tuyau lisse hélicoïdal à inclinaison constante.

3. Installation solaire selon la revendication 1 ou 2, **caractérisée en ce qu'**un échangeur de chaleur de post-chauffage (34) est arrangé dans le réservoir de chaleur (20), au-dessus du serpentin (R), de préférence coaxialement par rapport audit serpentin (R).

4. Installation solaire selon l'une des revendications 1 à 3, **caractérisée en ce qu'**au moins la partie inférieure du serpentin (R) comprend des moyens pour réduire la section de passage libre dans sa cavité, par exemple un ou plusieurs éléments de remplissage (30).

5. Installation solaire, comprenant une surface de capteurs (K) raccordée par une conduite d'alimentation (14) et une conduite de vidange (16), sur quelques tronçons notamment sous forme d'une paire de conduites (18), à un échangeur de chaleur (22) d'un réservoir de chaleur (20), ladite conduite de vidange (16) comprenant une pompe (26), le cas échéant avec un bypass (28) associé à la dernière, notamment selon l'une des revendications 1 à 4, l'échangeur de chaleur (22) étant ou comportant un ensemble de tuyaux qui fait partie d'un serpentin (R), **caractérisée en ce que** le serpentin véhicule dans sa cavité (32), au moins dans la partie inférieure (22), des éléments de remplissage (30) cylindriques ou profilés pour réduire la section de passage libre.

6. Installation solaire selon la revendication 5, **caractérisée en ce que** les éléments de remplissage ont une géométrie uniforme, p. ex. tubulaire.

7. Installation solaire selon l'une des revendications 4 à 6, **caractérisée en ce que** les éléments de remplissage (30) sont notamment des éléments individuels, fermés à leurs bouts et favorisant le tourbillonnement.

8. Installation solaire selon l'une des revendications 4 à 8, **caractérisée en ce que** les éléments de remplissage (30) sont véhiculés dans le serpentin (R) de manière essentiellement concentrique.
